# EUROPÄISCHE PATENTSCHRIFT

(11) **EP 2 551 736 B1**
(45) Veröffentlichungstag und Bekanntmachung des Hinweises auf die Patenterteilung: **23.11.2016**
(21) Anmeldenummer: 11290344.8
(22) Anmeldetag: 28.07.2011
(51) Int. Cl.: G05B 23/02, B60H 1/22, F24H 3/02

(54) **Verfahren zum Prüfen eines Steuergeräts für mindestens ein PTC-Heizelement oder eines PTC-Heizers für ein Fahrzeug und Steuergerät für mindestens ein PTC-Heizelement eines PTC-Heizers für ein Fahrzeug**
Method for testing a control device for at least one PTC heating element or a PTC heater for a vehicle and control device for at least one PTC heating element of a PTC heater for a vehicle
Procédé de contrôle d'un appareil de commande pour au moins un élément de chauffage PCT ou d'un chauffage PCT pour un véhicule et appareil de commande pour au moins un élément de chauffage PCT d'un chauffage PCT pour un véhicule

(43) Veröffentlichungstag der Anmeldung: 30.01.2013
(73) Patentinhaber: Mahle Behr France Rouffach S.A.S., 68250 Rouffach (FR)
(72) Erfinder: Gries, Jean-Philippe, 68000 Colmar (FR)
(74) Vertreter: Grauel, Andreas

(56) Entgegenhaltungen:
- EP-A1- 1 932 699
- EP-A2- 1 385 073
- DE-A1- 3 741 901
- DE-A1- 10 125 639
- GB-A- 2 434 864

## Beschreibung

Die vorliegende Erfindung bezieht sich auf ein Verfahren zum Prüfen eines Steuergeräts für mindestens ein PTC-Heizelement und auf ein Steuergerät für mindestens ein PTC-Heizelement eines PTC-Heizers für ein Fahrzeug.

Um eine Steuereinheit bzw. ein Steuergerät eines PTC-Heizers für ein Fahrzeug am Ende der Produktion bzw. Montage zu prüfen, wird ein Prüfmodus verwendet, der es ermöglicht, dass der Regler bzw. das Steuergerät andere Funktionsweisen bzw. Funktionalitäten durchläuft als in einem Normalbetriebsmodus im Fahrzeug. Bisher arbeiten bestehende Produkte häufig beispielsweise in einer Busversion in einem Prüfmodus, wobei ein Busprotokoll verwendet werden kann, das für diesen Modus reservierte Rahmen bzw. Frames enthält.

Die DE 101 25 639 A1 offenbart ein Verfahren zum Betreiben einer Scheibenheizung. Die GB 2 434 864 A offenbart eine Überwachungsvorrichtung zur Überwachung elektronischer Geräte in einem Kraftfahrzeug.

Es ist die Aufgabe der vorliegenden Erfindung, ein verbessertes Verfahren zum Prüfen eines Steuergeräts für mindestens ein PTC-Heizelement oder eines PTC-Heizers für ein Fahrzeug und ein verbessertes Steuergerät für mindestens ein PTC-Heizelement eines PTC-Heizers für ein Fahrzeug zu schaffen.

Diese Aufgabe wird durch ein Verfahren gemäß Anspruch 1 sowie durch ein Steuergerät gemäß Anspruch 7 gelöst.

Die vorliegende Erfindung schafft ein Verfahren zum Prüfen eines Steuergeräts für mindestens ein PTC-Heizelement oder eines PTC-Heizers für ein Fahrzeug, wobei das Verfahren folgende Schritte aufweist:
Anlegen eines Prüfmodussignals an das Steuergerät mit einer Frequenz und einer Anlegungszeitdauer, die sich von Frequenzen und Zeitdauern eines Ansteuersignals in einem Normalbetriebsmodus des Steuergeräts unterscheiden, um das Steuergerät in einen Prüfmodus zu versetzen;
Ausgeben eines Testsignals an eine Schnittstelle zu dem mindestens einen PTC-Heizelement ansprechend auf den Prüfmodus, um eine Testsequenz an das mindestens eine PTC-Heizelement auszugeben;
Vergleichen einer Sensorinformation, die von einer Schnittstelle zu einer dem mindestens einen PTC-Heizelement zugeordneten Sensoreinrichtung ansprechend auf das Testsignal empfangen wird, mit einer vorgebbaren Referenzinformation; und
Feststellen einer fehlerfreien Funktion des Steuergeräts oder des PTC-Heizers, wenn die Sensorinformation innerhalb eines Toleranzbereichs mit der Referenzinformation übereinstimmt, um das Steuergerät oder den PTC-Heizer zu prüfen, wobei im Schritt des Anlegens als Prüfmodussignal ein Pulsweitenmodulationssignal mit einem vorgebbaren, während der Anlegungszeitdauer gleichbleibenden Tastgrad verwendet wird, wobei im Schritt des Ausgebens als Testsignal ein Pulsweitenmodulationssignal mit einem veränderbaren Tastgrad verwendet wird.

Bei dem Fahrzeug kann es sich um ein Kraftfahrzeug handeln, insbesondere ein straßengebundenes Kraftfahrzeug, beispielsweise einen Personenkraftwagen, Lastkraftwagen, ein Fahrzeug zum Personentransport oder ein sonstiges Nutzfahrzeug. Unter PTC wird ein positiver Temperaturkoeffizient (engl.: Positive Temperature Coefficient) verstanden. Ein PTC-Heizer kann beispielsweise das zumindest eine PTC-Heizelement und das Steuergerät aufweisen. Das Steuergerät kann ausgebildet sein, um einen Betrieb des PTC-Heizelements zu steuern. Bei dem PTC-Heizelement kann es sich somit um ein Heizelement aus einem Material mit positivem Temperaturkoeffizienten bzw. einem Kaltleiter handeln, beispielsweise einen PTC-Widerstand, PTC-Thermistor oder dergleichen. Das Prüfmodussignal weist eine charakteristische Frequenz auf, die sich von Frequenzen in einem Normalbetriebsmodus des Steuergeräts bzw. des PTC-Heizers unterscheidet. Das Prüfmodussignal weist auch eine charakteristische Anlegungszeitdauer bzw. charakteristische Zeitdauer eines bestimmten Zustandes des Prüfmodussignals auf, wobei sich die Anlegungszeitdauer bzw. Zeitdauer von in einem Normalbetriebsmodus des Steuergeräts vorkommenden Zeitdauern unterscheidet. Das Prüfmodussignal kann ausgebildet sein, um einen Eintritt des Steuergeräts in den Prüfmodus zu bewirken. Dabei kann das Steuergerät basierend auf einer Anlegung des Prüfmodussignals in den Prüfmodus wechseln bzw. umschalten. Der Prüfmodus kann auch als Diagnosemodus, Testmodus, Servicemodus oder dergleichen bezeichnet werden. Wenn sich das Steuergerät in dem Prüfmodus befindet, kann sich eine Ansteuerung des mindestens einen PTC-Heizelements von einer Ansteuerung in einem Normalbetriebsmodus des Steuergeräts unterscheiden. Das Testsignal kann durch das Steuergerät ansprechend auf das Anlegen des Prüfmodussignals erzeugt, aus einer internen oder externen Speichereinrichtung ausgelesen oder von extern empfangen und an die Schnittstelle zu dem mindestens einen PTC-Heizelement angelegt werden. Das Testsignal kann ebenfalls die charakteristische Frequenz des Prüfmodussignals aufweisen. Das Testsignal ist ausgebildet, um die Durchführung oder das Anlegen einer Testsequenz an das mindestens eine PTC-Heizelement zu ermöglichen. Durch das Anlegen der Testsequenz kann das mindestens eine PTC-Heizelement hinsichtlich einer Reaktion auf das Testsignal geprüft werden. Auch kann bei der Testsequenz eine ordnungsgemäße Durchführung der Testsequenz durch das Steuergerät geprüft werden. Die Sensorinformation kann beispielsweise einen elektrischen Strom bzw. eine elektrische Stromstärke durch das mindestens eine PTC-Heizelement, eine elektrische Spannung über das mindestens eine PTC-Heizelement, eine Temperatur des mindestens einen PTC-Heizelements und/oder dergleichen repräsentieren. Bei der Sensoreinrichtung kann es sich beispielsweise um einen Stromsensor, Spannungssensor, Temperatursensor und/oder dergleichen handeln. Die Sensorinformation kann eine Reaktion auf das Testsignal repräsentieren. Bei der Referenzinformation kann es sich um eine Vergleichsinformation, Vorgabeinformation oder dergleichen handeln. Das Steuergerät kann beispielsweise ausgebildet sein, um die Referenzinformation aus einer internen oder externen Speichereinrichtung auszulesen. Stimmen die Sensorinformation und die Referenzinformation innerhalb des Toleranzbereichs überein, entspricht somit eine tatsächliche Reaktion des mindestens einen PTC-Heizelements auf das Testsignal einer vordefinierten Reaktion. Der Toleranzbereich kann eine Messtoleranz, Materialtoleranz und/oder dergleichen umfassen. Der Toleranzbereich kann beispielsweise 1 Prozent, 2 Prozent, 3 Prozent, 5 Prozent oder 10 Prozent eines durch die Referenzinformation repräsentierten Wertes betragen. Der Prüfmodus und/oder die Testsequenz können anschließend an eine Fertigung des Steuergeräts oder des PTC-Heizers oder nach einem Einbau des PTC-Heizers in das Fahrzeug ausgeführt werden.

Die vorliegende Erfindung schafft ferner ein Steuergerät für mindestens ein PTC-Heizelement eines PTC-Heizers für ein Fahrzeug, wobei das Steuergerät ausgebildet ist, um:
ansprechend auf ein Prüfmodussignal mit einer Frequenz und einer Anlegungszeitdauer, die sich von Frequenzen und Zeitdauern eines Ansteuersignals in einem Normalbetriebsmodus des Steuergeräts unterscheiden, in einen Prüfmodus einzutreten; ansprechend auf den Prüfmodus ein Testsignal an eine Schnittstelle zu dem mindestens einen PTC-Heizelement auszugeben, um eine Testsequenz an das mindestens eine PTC-Heizelement auszugeben;
eine Sensorinformation, die von einer Schnittstelle zu einer dem mindestens einen PTC-Heizelement zugeordneten Sensoreinrichtung ansprechend auf das Testsignal empfangen wird, mit einer vorgebbaren Referenzinformation zu vergleichen; und eine fehlerfreie Funktion des Steuergeräts oder des PTC-Heizers festzustellen, wenn die Sensorinformation innerhalb eines Toleranzbereichs mit der Referenzinformation übereinstimmt, wobei im Schritt des Anlegens als Prüfmodussignal ein Pulsweitenmodulationssignal mit einem vorgebbaren, während der Anlegungszeitdauer gleichbleibenden Tastgrad verwendet wird, wobei im Schritt des Ausgebens als Testsignal ein Pulsweitenmodulationssignal mit einem veränderbaren Tastgrad verwendet wird.
Ein solches Steuergerät kann in Verbindung mit dem oben genannten Verfahren vorteilhaft geprüft werden. Somit kann das oben genannte Verfahren in Verbindung mit dem Steuergerät vorteilhaft ausgeführt werden.

Der vorliegenden Erfindung liegt die Erkenntnis zugrunde, dass zum Versetzen eines PTC-Reglers bzw. eines Steuergeräts für mindestens ein PTC-Heizelement in einen Prüfmodus, ein Signal mit einer spezifischen Frequenz während einer bestimmten Zeitdauer angelegt werden kann. Um das Steuergerät in dem Prüfmodus zu betreiben, kann ein spezifisches Testsignal angelegt werden. Zum Eintritt in den Prüfmodus wird dabei eine spezifische Frequenz des Prüfmodussignals, welche sich von der Frequenz in dem Normalbetriebsmodus unterscheidet, während einer bestimmten Zeitdauer, welche sich von allen z. B. in dem Firmware-Algorithmus verwendeten Zeitdauern unterscheidet, verwendet bzw. angelegt.

Vorteilhafterweise kann sichergestellt werden, dass ein PTC-Regler bzw. Steuergerät für mindestens ein PTC-Heizelement nicht versehentlich in einen Prüfmodus wechselt, da der Eintritt in den Prüfmodus mittels eines Signals erfolgt, dessen Charakteristik sich für das Steuergerät erkennbar von Signalcharakteristiken während eines Normalbetriebsmodus unterscheidet. Somit kann eine Funktion des Steuergeräts bzw. des PTC-Heizers beispielsweise auch in einem eingebauten Zustand in einem Fahrzeug zuverlässiger und sicherer gemacht werden. Der Prüfmodus des PTC-Reglers bzw. Steuergerätes kann somit auf verwechslungssichere Weise angewählt werden. Vorteilhaft ist auch die Möglichkeit einer Verwendung von lediglich einem Kabel für den Eintritt in den Prüfmodus sowie für die Verwaltung der Testsequenz. Aufgrund einer Implementierung beispielsweise durch Firmware können die Bedingungen bzw. Charakteristiken des Prüfmodussignals ohne weiteres modifiziert werden, was eine Flexibilität der Prüfung erhöht, wenn sich Betriebsspezifikationen ändern. Insbesondere kann im Schritt des Anlegens als Prüfmodussignal ein Pulsweitenmodulationssignal mit einem vorgebbaren, während der Anlegungszeitdauer gleichbleibenden Tastgrad verwendet werden. Unter einem Tastgrad kann eine Verhältnis einer Zeitdauer verstanden werden, in der ein Signal einen Hoch-Pegel in Bezug auf eine Zyklusdauer des Signals einnimmt. Der Tastgrad kann ausgebildet sein, um durch das Steuergerät als eine weitere Bedingung zum Eintritt in den Prüfmodus erkannt zu werden. Somit kann der Tastgrad ein charakteristischer Tastgrad sein, der für das Prüfmodussignal spezifisch sein kann. Eine solche Ausführungsform bietet den Vorteil, dass es somit möglich ist, durch das Anlegen des Prüfmodussignals in Gestalt eines Pulsweitenmodulationssignals mit einem spezifischen Tastgrad eine Verwechslungsgefahr mit einem dem Normalbetriebsmodus zugeordneten Signal weiter zu reduzieren.

Auch kann im Schritt des Ausgebens als Testsignal ein Pulsweitenmodulationssignal mit einem veränderbaren Tastgrad verwendet werden. Bei unterschiedlichen Tastgraden des Testsignals können unterschiedliche Werte der Sensorinformation erhalten werden. Eine solche Ausführungsform bietet den Vorteil, dass mittels eines solchen Testsignals eine Testsequenz bzw. Testprozedur an einem PTC-Halteelement auf einfache und effiziente Weise durchgeführt werden kann. Die Testsequenz kann somit mittels des veränderbaren Tastgrades des Testsignals unaufwändig realisiert werden.

Ferner kann ein Schritt des Veränderns eines Tastgrades des Testsignals nach einem vorgebbaren Schema während einer Durchführung der Testsequenz vorgesehen sein. Dabei kann das vorgebbare Schema eine Veränderung des Tastgrades in Stufen mit einer vorgebbaren Stufenhöhe und Stufenbreite aufweisen. Die Stufenhöhe bezeichnet beispielsweise eine prozentuale Änderung des Tastgrades. Die Stufenbreite bezeichnet beispielsweise eine Zeitdauer, während der eine bestimmte Stufenhöhe des Tastgrades in dem Testsignal vorliegt. Die Veränderung des Tastgrades kann ein Einschalten und/oder Ausschalten unterschiedlicher Stufen bzw. Ebenen, d. h. PTC-Heizelemente, des PTC-Heizers einzeln oder gemeinsam bewirken und kann durch das vorgebbare Schema spezifischer Tastgrad-Stufen erreicht werden. Eine solche Ausführungsform bietet den Vorteil, dass eine Prüfung des PTC-Heizers bzw. von dessen PTC-Heizelementen zuverlässig, umfassend und effizient ausgeführt werden kann.

Gemäß einer Ausführungsform kann im Schritt des Veränderns der Tastgrad in Stufen erhöht werden. Beispielsweise kann jede Erhöhung des Tastgrades um eine Stufe bewirken, dass ein weiteres PTC-Heizelement des PTC-Heizers zugeschaltet wird. Eine solche Ausführungsform bietet den Vorteil, dass auf diese Weise eine Prüfung des PTC-Heizers bzw. von dessen PTC-Heizelementen ein besonders aussagekräftiges Ergebnis liefern kann, an dem ein Verhalten einzelner PTC-Heizelemente besonders gut abgelesen werden kann.

Hierbei können die Stufen 60 Prozent, 70 Prozent, 80 Prozent, 90 Prozent und 100 Prozent Tastgrad betragen. Eine solche Ausführungsform bietet den Vorteil, dass somit die Testsequenz schrittweise bis zu einer Vollbelastung des PTC-Heizers bzw. von dessen PTC-Heizelementen durchgeführt werden kann, was eine Aussagekraft der Prüfung erhöht. Denn durch solche vorgegebenen Stufen kann die Sensorinformation besonders effizient mit der Referenzinformation verglichen werden.

Auch kann der Schritt des Veränderns des Tastgrades nach Ablauf einer Einschwingzeit ansprechend auf das Ausgeben des Testsignals durchgeführt werden. Die Einschwingzeit kann hierbei vorgegeben sein oder beispielsweise durch das Steuergerät ermittelt bzw. gemessen werden. Wenn die Einschwingzeit nach dem Beginn des Ausgebens des Testsignals abgelaufen ist, wird die Veränderung des Tastgrades des Testsignals durchgeführt. Somit kann während der Einschwingzeit der Tastgrad des Testsignals gleich bleibend sein. Eine solche Ausführungsform bietet den Vorteil, dass die Genauigkeit der Prüfung bzw. der Testsequenz erhöht wird, da Störeinflüsse verringert werden, indem abgewartet wird, bis die Einschwingzeit abgelaufen ist.

Gemäß einer Ausführungsform kann im Schritt des Feststellens die fehlerfreie Funktion des Steuergeräts oder des PTC-Heizers zusätzlich festgestellt werden, wenn eine Veränderung der Sensorinformation innerhalb einer vorgebbaren Verzögerung ansprechend auf eine Veränderung des Testsignals erfolgt. Wenn beispielsweise der Tastgrad des Testsignals zu einem ersten Zeitpunkt um eine Stufe erhöht wurde, kann eine tatsächliche Verzögerung bis zu einem zweiten Zeitpunkt gemessen werden, bei dem eine Änderung in der Sensorinformation als Reaktion auf die Veränderung des Tastgrades auftritt. Wenn die tatsächliche Verzögerung der vorgebbaren Verzögerung innerhalb eines Toleranzbereichs entspricht, kann die fehlerfreie Funktion des Steuergeräts oder des PTC-Heizers festgestellt werden. Eine solche Ausführungsform bietet den Vorteil, dass ein Ergebnis der Prüfung bzw. der Testsequenz noch genauer und aussagekräftiger gemacht wird. Die Verzögerung stellt hierbei eine zusätzliche Kategorie der Prüfung bzw. der Testsequenz dar, was die Aussagekraft erhöht.

Ein Austritt aus diesem Prüfmodus beispielsweise in den Normalbetriebsmodus kann erfolgen, wenn eine der Bedingungen für den Eintritt, d. h. die charakteristische Frequenz oder Anlegungszeitdauer, nicht mehr erfüllt ist oder das Testsignal nicht ordnungsgemäß verläuft und somit das Einschalten/Ausschalten einer Stufe des PTC-Heizers, d. h. eines PTC-Heizelements, nicht ordnungsgemäß erfolgt.

Vorteilhafte Ausführungsbeispiele der vorliegenden Erfindung werden nachfolgend Bezug nehmend auf die beiliegenden Zeichnungen näher erläutert. Es zeigen:
Fig. 1 eine Darstellung eines PTC-Heizers gemäß einem Ausführungsbeispiel der vorliegenden Erfindung; und
Fig. 2 eine Darstellung eines Prüfmodussignals, eines Testsignals sowie einer Sensorinformation, gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

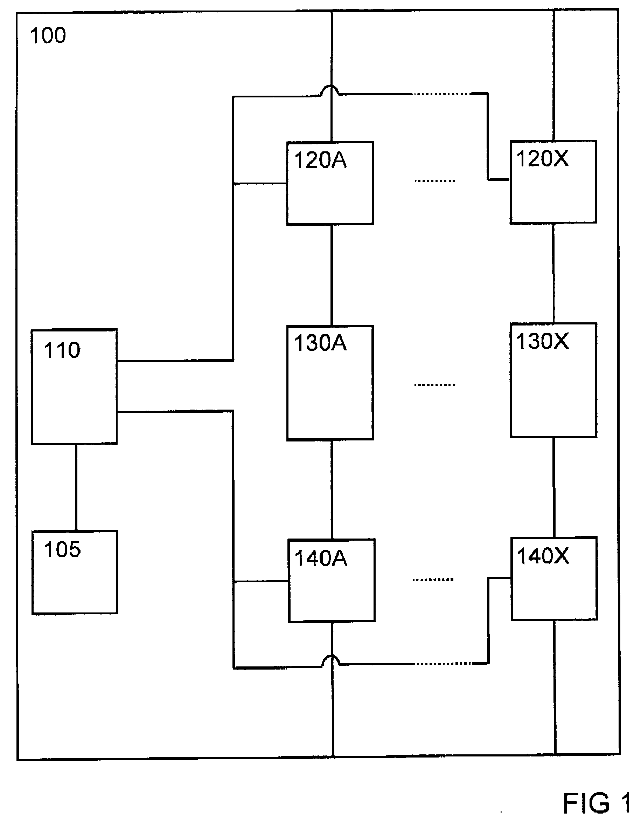

Fig. 1 zeigt eine Darstellung eines PTC-Heizers 100 gemäß einem Ausführungsbeispiel der vorliegenden Erfindung. Der PTC-Heizer 100 weist einen Speicher 105, ein Steuergerät 110, einen ersten Schalter 120A, einen x-ten Schalter 120X, einen ersten PTC-Widerstand 130A, einen x-ten PTC-Widerstand 130X, einen ersten Sensor 140A und einen x-ten Sensor 140X auf. Der erste Schalter 120A, der erste PTC-Widerstand 130A und der erste Sensor 140A bilden eine erste Stufe des PTC-Heizers 100. Der x-te Schalter 120X, der x-te PTC-Widerstand 130Xund der x-te Sensor 140X bilden eine x-te Stufe des PTC-Heizers 100. Punkte zwischen dem ersten Schalter 120A und dem x-ten Schalter 120X, zwischen dem ersten PTC-Widerstand 130A und dem x-ten PTC-Widerstand 130X, zwischen dem ersten Sensor 140A und dem x-ten Sensor 140X, in der elektrischen Leitung zwischen dem Steuergerät 110 und dem x-ten Schalter 120X sowie in der elektrischen Leitung zwischen dem Steuergerät 110 und dem x-ten Sensor 140X repräsentierten die Möglichkeit, dass zwischen der ersten Stufe und der x-ten Stufe des PTC-Heizers 100 zumindest eine weitere Stufe des PTC-Heizers 100, die aus einem weiteren Schalter, einem weiteren PTC-Widerstand sowie einem weiteren Sensor gebildet ist, angeordnet sein kann.

Der Speicher 105 ist mit dem Steuergerät 110 über eine Kommunikationsschnittstelle, beispielsweise zumindest eine elektrische Leitung bzw. Signalleitung, verbunden. Auch wenn es in Fig. 1 nicht gezeigt ist, kann der Speicher 105 alternativ auch außerhalb des PTC-Heizers 100 angeordnet sein oder Teil des Steuergeräts 110 sein. In dem Speicher 105 kann beispielsweise eine Referenzinformation bzw. ein Satz von Referenzinformationen für eine Testsequenz gespeichert sein.

Das Steuergerät 110 ist über eine Kommunikationsschnittstelle, beispielsweise zumindest eine elektrische Leistung bzw. Signalleitung, mit dem ersten Schalter 120A und dem x-ten Schalter 120X verbunden. Das Steuergerät 110 ist über eine weitere Kommunikationsschnittstelle, beispielsweise zumindest eine weitere elektrische Leistung bzw. Signalleitung, mit dem ersten Sensor 140A und dem x-ten Sensor 140X verbunden. Das Steuergerät 110 kann eine elektrische Schaltung beispielsweise in Gestalt einer Steuerelektronik, Steuerlogik oder dergleichen aufweisen. In einem Normalbetriebsmodus ist das Steuergerät 110 ausgebildet, um einen Betrieb des PTC-Heizers 100 zu steuern. Auch wenn es in Fig. 1 nicht explizit dargestellt ist, kann das Steuergerät 110 einen Eingang für externe Signale aufweisen. Das Steuergerät 110 ist ausgebildet, um ansprechend auf ein Prüfmodussignal mit einer Frequenz und einer Anlegungszeitdauer, die sich von Frequenzen und Zeitdauern eines Ansteuersignals in einem Normalbetriebsmodus des Steuergeräts 110 unterscheiden, in einen Prüfmodus einzutreten. Das Prüfmodussignal kann dabei insbesondere an dem Eingang für externe Signale empfangen werden. Das Steuergerät 110 ist auch ausgebildet, um ansprechend auf den Prüfmodus ein Testsignal an den ersten Schalter 120A und den x-ten Schalter 120X auszugeben, um eine Testsequenz an der ersten Stufe und der x-ten Stufe des PTC-Heizers 100 durchzuführen.

Der erste Schalter 120A ist in eine erste elektrische Versorgungsleitung geschaltet, die durch den ersten PTC-Widerstand 130A verläuft und diesen mit elektrischem Strom versorgen kann. Der erste Schalter 120A ist ausgebildet, um das Testsignal von dem Steuergerät 110 in dem Prüfmodus zu empfangen. Der erste Schalter 120A ist ausgebildet, um basierend auf dem Testsignal einen Fluss von elektrischem Strom über die erste Versorgungsleitung zu dem ersten PTC-Widerstand 130A zu ermöglichen oder zu unterbrechen. Der x-te Schalter 120X ist in eine x-te elektrische Versorgungsleitung geschaltet, die durch den x-ten PTC-Widerstand 130X verläuft und diesen mit elektrischem Strom versorgen kann. Der x-te Schalter 120X ist ausgebildet, um das Testsignal von dem Steuergerät 110 in dem Prüfmodus zu empfangen. Der x-te Schalter 120X ist ausgebildet, um basierend auf dem Testsignal einen Fluss von elektrischem Strom über die x-te Versorgungsleitung zu dem x-ten PTC-Widerstand 130X zu ermöglichen oder zu unterbrechen.

Der erste PTC-Widerstand 130A kann als ein Heizelement dienen. Der erste PTC-Widerstand 130A ist zwischen dem ersten Schalter 120A und dem ersten Sensor 140A angeordnet. In Abhängigkeit von dem Testsignal kann sich der erste PTC-Widerstand 130A erwärmen und kann sich ein Widerstandswert des ersten PTC-Widerstands 130A verändern. Der x-te PTC-Widerstand 130X kann als ein Heizelement dienen. Der x-te PTC-Widerstand 130X ist zwischen dem x-ten Schalter 120X und dem x-ten Sensor 140X angeordnet. In Abhängigkeit von dem Testsignal kann sich der x-te PTC-Widerstand 130X erwärmen und kann sich ein Widerstandswert des x-ten PTC-Widerstands 130X verändern.

Der erste Sensor 140A kann beispielsweise ein Stromsensor sein. Der erste Sensor 140A ist in die erste elektrische Versorgungsleitung geschaltet, die durch den ersten PTC-Widerstand 130A verläuft. Der erste Sensor 140A ist ausgebildet, um abhängig von einem erfassten Strom in der ersten elektrischen Versorgungsleitung eine erste Sensorinformation an das Steuergerät 110 auszugeben. Der x-te Sensor 140X kann beispielsweise ein Stromsensor sein. Der x-te Sensor 140X ist in die x-te elektrische Versorgungsleitung geschaltet, die durch den x-ten PTC-Widerstand 130X verläuft. Der x-te Sensor 140X ist ausgebildet, um abhängig von einem erfassten Strom in der x-ten elektrischen Versorgungsleitung eine x-te Sensorinformation an das Steuergerät 110 auszugeben.

Das Steuergerät 110 ist ferner ausgebildet, um die erste Sensorinformation von dem ersten Sensor 140A und die x-te Sensorinformation von dem x-ten Sensor 140X zu empfangen. Das Steuergerät 110 ist ausgebildet, um die erste Sensorinformation und die x-te Sensorinformation mit einer vorgebbaren Referenzinformation, die beispielsweise aus dem Speicher 105 ausgelesen werden kann, zu vergleichen. Auch ist das Steuergerät 110 ausgebildet, um eine fehlerfreie Funktion des Steuergeräts 110 oder der Stufen des PTC-Heizers 100 festzustellen, wenn die erste Sensorinformation und die x-te Sensorinformation innerhalb eines Toleranzbereichs mit der Referenzinformation übereinstimmen.

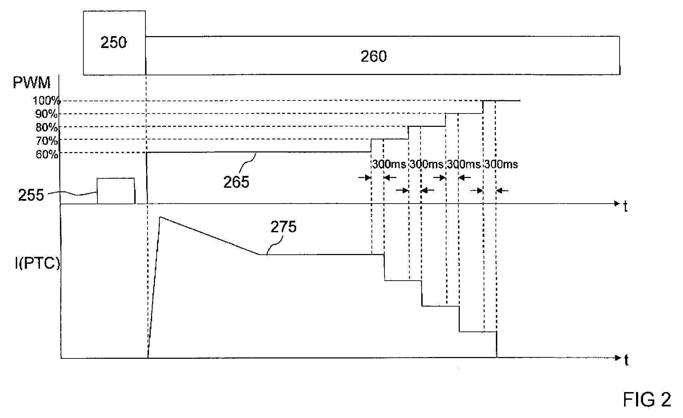

Fig. 2 zeigt eine Darstellung eines Prüfmodussignals, eines Testsignals sowie einer Sensorinformation, gemäß einem Ausführungsbeispiel der vorliegenden Erfindung. Gezeigt sind eine Eintrittsphase 250 in einen Prüfmodus, ein Prüfmodussignal 255, ein Prüfmodus 260, ein Testsignal 265, eine Sensorinformation 275 und zwei Zeitachsen t. Diese können einem PTC-Heizer bzw. einem Steuergerät zugeordnet sein, wie beispielsweise dem PTC-Heizer bzw. dem Steuergerät aus Fig. 1. Genau gesagt zeigt Fig. 2 ein Doppeldiagramm, wobei in einem oben dargestellten Teilbereich über einer ersten Zeitachse t ein Verlauf des Prüfmodussignals 255 sowie des Testsignals 265 dargestellt sind, und wobei in einem unten dargestellten Teilbereich über einer zweiten Zeitachse t ein Verlauf der Sensorinformation 275 dargestellt ist. Dabei ist zu beachten, dass an den beiden Zeitachsen t der gleiche Zeitabschnitt aufgetragen ist. In Fig. 2 über dem Doppeldiagramm dargestellt ist eine Moduseinteilung in die Eintrittsphase 250 und den Prüfmodus 260 gezeigt, wobei eine senkrecht eingezeichnete, gestrichelte Linie eine Grenze zwischen der Eintrittsphase 250 und dem Prüfmodus 260 veranschaulicht.

In der Eintrittsphase 250 in den Prüfmodus liegt das Prüfmodussignal 255 vor. Das Prüfmodussignal 255 weist einen rechteckigen Verlauf auf. Bei dem Prüfmodussignal 255 kann es sich beispielsweise um ein Pulsweitenmodulationssignal bzw. PWM-Signal mit einer Frequenz von 380Hz und einem Tastgrad 11 Prozent für eine Zeitdauer von einer Sekunde handeln. In der Eintrittsphase 250 liegt keine Sensorinformation 275 vor bzw. weist die Sensorinformation 275 einen Wert von null auf.

In dem Prüfmodus 260 bzw. während des Prüfmodus 260 liegen das Testsignal 265 sowie die Sensorinformation 275 vor. Bei dem Testsignal 265 kann es sich um ein Pulsweitenmodulationssignal bzw. PWM-Signal mit einer Frequenz von beispielsweise 380Hz handeln. Zu Beginn des Prüfmodus 260 weist das Testsignal 265 einen Tastgrad von beispielsweise 60 Prozent auf. Dieser Tastgrad von beispielsweise 60 Prozent ist über eine Einschwingzeit, die sich beispielsweise über ungefähr die Hälfte einer Zeitdauer des Prüfmodus 260 erstreckt, gleich bleibend. Nach der Einschwingzeit weist das Testsignal 265 eine schrittweise Erhöhung des Tastgrades auf. In einer ersten Stufe erhöht sich der Tastgrad des Testsignals 265 von 60 Prozent auf 70 Prozent. In einer zweiten Stufe steigt der Tastgrad des Testsignals 265 von 70 Prozent auf 80 Prozent. In einer dritten Stufe erfolgt eine Erhöhung des Tastgrades des Testsignals 265 von 80 Prozent auf 90 Prozent. In einer vierten Stufe erhöht sich der Tastgrad des Testsignals 265 von 90 Prozent auf 100 Prozent. Die Stufen weisen beispielhaft gemäß dem in Fig. 2 gezeigten Ausführungsbeispiel die gleiche Stufenlänge bzw. Zeitdauer auf. Die Sensorinformation 275 kann Werte eines Stroms I(PTC) durch ein PTC-Heizelement bzw. einen PTC-Heizer repräsentieren. Zu Beginn des Prüfmodus 260 weist die Sensorinformation 275 einen beispielsweise rampenlosen Anstieg auf einen maximalen Wert auf. Während des weiteren Verlaufs der Einschwingzeit in dem Testmodus 260 sinkt der Wert der Sensorinformation 275 auf einen konstanten Wert, der bis zu einem Ablauf der Einschwingzeit vorliegt. Nach Ablauf der Einschwingzeit weist die Sensorinformation 275 einen stufenförmigen Verlauf auf. Der stufenförmigen Erhöhung des Tastgrades des Testsignals 265 entspricht eine um beispielsweise 300 Millisekunden verzögerte stufenförmige Verringerung des Wertes der Sensorinformation 275 in ebenfalls vier Stufen bis auf einen Wert von null.

Um ein Steuergerät bzw. einen PTC-Heizer in den Prüfmodus 260 zu versetzen, wird das Prüfmodussignal 255 mit einer spezifischen PWM-Frequenz während einer bestimmten Zeitdauer angelegt, und um das Steuergerät bzw. den PTC-Heizer in dem Prüfmodus 260 zu betreiben, wird das Testsignal 265 mit spezifischen Tastgraden angelegt.

Gemäß einem weiteren Ausführungsbeispiel der vorliegenden Erfindung kann ein ähnlicher Algorithmus zur Prüfung des Steuergeräts oder des PTC-Heizers durch unterschiedliche Spannungen erreicht werden. Um den Eintritt in den Prüfmodus beispielsweise am Fertigungsende sicherzustellen, kann gemäß noch einem weiteren Ausführungsbeispiel der vorliegenden Erfindung mittels eines zufälligen Frequenzwertes, der in dem von der Hardware her zulässigen Frequenzbereich liegt, und einer zufälligen Zeitdauer ein Schlüsselcode generiert werden, der bei jedem Los der Elektronik bzw. des Steuergeräts aktualisiert werden kann.

Die beschriebenen Ausführungsbeispiele sind nur beispielhaft gewählt und können miteinander kombiniert werden.

### Bezugszeichenliste

- 100: PTC-Heizer
- 105: Speicher
- 110: Steuergerät
- 120A: erster Schalter
- 120X: x-ter Schalter
- 130A: erster PTC-Widerstand
- 130X: x-ter PTC-Widerstand
- 140A: erster Sensor
- 140X: x-ter Sensor

- 250: Eintrittsphase in Prüfmodus
- 255: Prüfmodussignal
- 260: Prüfmodus
- 265: Testsignal
- 275: Sensorinformation
- t: Zeit

## Patentansprüche

1. Verfahren zum Prüfen eines Steuergeräts (110) für mindestens ein PTC-Heizelement (130A, 130X) oder eines PTC-Heizers (100) für ein Fahrzeug, wobei das Verfahren folgende Schritte aufweist:
- Anlegen eines Prüfmodussignals (255) an das Steuergerät (110) mit einer Frequenz und einer Anlegungszeitdauer, die sich von Frequenzen und Zeitdauern eines Ansteuersignals in einem Normalbetriebsmodus des Steuergeräts (110) unterscheiden, um das Steuergerät (110) in einen Prüfmodus (260) zu versetzen;
- Ausgeben eines Testsignals (265) an eine Schnittstelle zu dem mindestens einen PTC-Heizelement (130A, 130X) ansprechend auf den Prüfmodus (260), um eine Testsequenz an das mindestens eine PTC-Heizelement (130A, 130X) auszugeben;
- Vergleichen einer Sensorinformation (275), die von einer Schnittstelle zu einer dem mindestens einen PTC-Heizelement (130A, 130X) zugeordneten Sensoreinrichtung (140A, 140X) ansprechend auf das Testsignal (265) empfangen wird, mit einer vorgebbaren Referenzinformation; und
- Feststellen einer fehlerfreien Funktion des Steuergeräts (110) oder des PTC-Heizers (100), wenn die Sensorinformation (275) innerhalb eines Toleranzbereichs mit der Referenzinformation übereinstimmt, um das Steuergerät (110) oder den PTC-Heizer (100) zu prüfen,
**dadurch gekennzeichnet, dass**
im Schritt des Anlegens als Prüfmodussignal (255) ein Pulsweitenmodulationssignal mit einem vorgebbaren, während der Anlegungszeitdauer gleichbleibenden Tastgrad verwendet wird,
wobei im Schritt des Ausgebens als Testsignal (265) ein Pulsweitenmodulationssignal mit einem veränderbaren Tastgrad verwendet wird.

2. Verfahren nach Anspruch 1, **gekennzeichnet durch** einen Schritt des Veränderns eines Tastgrades des Testsignals (265) nach einem vorgebbaren Schema während einer Durchführung der Testsequenz, wobei das vorgebbare Schema eine Veränderung des Tastgrades in Stufen mit einer vorgebbaren Stufenhöhe und/oder Stufenbreite aufweist.

3. Verfahren gemäß Anspruch 2, **dadurch gekennzeichnet, dass** im Schritt des Veränderns der Tastgrad in Stufen erhöht wird.

4. Verfahren gemäß Anspruch 3, **dadurch gekennzeichnet, dass** die Stufen 60 Prozent, 70 Prozent, 80 Prozent, 90 Prozent und 100 Prozent Tastgrad betragen.

5. Verfahren gemäß einem der Ansprüche 2 bis 4, **dadurch gekennzeichnet, dass** der Schritt des Veränderns des Tastgrades nach Ablauf einer Einschwingzeit ansprechend auf das Ausgeben des Testsignals (265) durchgeführt wird.

6. Verfahren gemäß einem der vorangegangenen Ansprüche, **dadurch gekennzeichnet, dass** im Schritt des Feststellens die fehlerfreie Funktion des Steuergeräts (110) oder des PTC-Heizers (100) zusätzlich festgestellt wird, wenn eine Veränderung der Sensorinformation (275) innerhalb einer vorgebbaren Verzögerung ansprechend auf eine Veränderung des Testsignals (265) erfolgt.

7. Steuergerät (110) für mindestens ein PTC-Heizelement (130A, 130X) eines PTC-Heizers (100) für ein Fahrzeug, wobei das Steuergerät (110) ausgebildet ist, um:
- ansprechend auf ein Prüfmodussignal (255) mit einer Frequenz und einer Anlegungszeitdauer, die sich von Frequenzen und Zeitdauern eines Ansteuersignals in einem Normalbetriebsmodus des Steuergeräts (110) unterscheiden, in einen Prüfmodus (260) einzutreten;
- ansprechend auf den Prüfmodus (260) ein Testsignal (265) an eine Schnittstelle zu dem mindestens einen PTC-Heizelement (130A, 130X) auszugeben, um eine Testsequenz an das mindestens eine PTC-Heizelement (130A, 130X) auszugeben;
- eine Sensorinformation (275), die von einer Schnittstelle zu einer dem mindestens einen PTC-Heizelement (130A, 130X) zugeordneten Sensoreinrichtung (140A, 140X) ansprechend auf das Testsignal (265) empfangen wird, mit einer vorgebbaren Referenzinformation zu vergleichen; und
- eine fehlerfreie Funktion des Steuergeräts (110) oder des PTC-Heizers (100) festzustellen, wenn die Sensorinformation (265) innerhalb eines Toleranzbereichs mit der Referenzinformation übereinstimmt,
**dadurch gekennzeichnet, dass**
im Schritt des Anlegens als Prüfmodussignal (255) ein Pulsweitenmodulationssignal mit einem vorgebbaren, während der Anlegungszeitdauer gleichbleibenden Tastgrad verwendet wird,
wobei im Schritt des Ausgebens als Testsignal (265) ein Pulsweitenmodulationssignal mit einem veränderbaren Tastgrad verwendet wird.

## Claims

1. A method for testing a control unit (110) for at least one PTC heating element (130A, 130X) or a PTC heater (100) for a vehicle, wherein the method comprises the steps of:
- applying a test mode signal (255) to the control unit (110) having a frequency and an application time period that differ from frequencies and time periods of a drive signal in a normal operation mode of the control unit (110) in order to set the control unit (110) into a test mode (260);
- outputting a test signal (265) to an interface to the at least one PTC heating element (130A, 130X) in response to the test mode (260) in order to output a test sequence to the at least one PTC heating element (130A, 130X);
- comparing a sensor information (275) received by an interface to a sensor means (140A, 140X) assigned to the at least one PTC heating element (130A, 130X) in response to the test signal (265) with a predefinable reference information; and
- determining an error-free functioning of the control unit (110) or of the PTC heater (100) if the sensor information (275) matches the reference information within a tolerance range in order to test the control unit (110) or the PTC heater (100),
**characterised in that**
in the application step, a pulse width modulation signal with a predefinable duty cycle which is constant during the application time period is used as the test mode signal (255),
wherein in the outputting step, a pulse width modulation signal with a variable duty cycle is used as the test signal (265).

2. The method according to claim 1, **characterised by** a step of varying a duty cycle of the test signal (265) according to a predefinable scheme during an execution of the test sequence, wherein said predefinable scheme comprises a variation of the duty cycle in steps with a predefinable step height and/or step width.

3. The method according to claim 2, **characterised in that** the duty cycle is increased in steps in the variation step.

4. The method according to claim 3, **characterised in that** the steps are 60 percent, 70 percent, 80 percent, 90 percent and 100 percent of the duty cycle.

5. The method according to one of claims 2 to 4, **characterised in that** the step of varying the duty cycle is performed after the expiry of a settling time in response to the output of the test signal (265).

6. The method according to one of the preceding claims, **characterised in that** the correct functioning of the control unit (110) or of the PTC heater (100) is additionally determined in the determination step if a change in the sensor information (275) occurs within a predefinable delay in response to a variation of the test signal (265).

7. A control unit (110) for at least one PTC heating element (130A, 130X) of a PTC heater (100) for a vehicle, wherein the control unit (110) is configured to:
- enter into a test mode (260) in response to a test mode signal (255) with a frequency and an application time period that differ from frequencies and time periods of a drive signal in a normal operation mode of the control unit (110);
- output a test signal (265) to an interface to the at least one PTC heating element (130A, 130X) in response to the test mode (260) in order to output a test sequence to the at least one PTC heating element (130A, 130X);
- compare a sensor information (275) received by an interface to a sensor means (140A, 140X) assigned to the at least one PTC heating element (130A, 130X) in response to the test signal (265) with a predefinable reference information; and
- determine a correct functioning of the control unit (110) or of the PTC heater (100) if the sensor information (265) matches the reference information within a tolerance range,
**characterised in that**
in the application step, a pulse width modulation signal with a predefinable duty cycle which is constant during the application time period is used as the test mode signal (255),
wherein in the outputting step, a pulse width modulation signal with a variable duty cycle is used as the test signal (265).

## Revendications

1. Procédé de contrôle d'un appareil de commande (110) pour au moins un élément chauffant à coefficient de température positif - CTP - (130A, 130X) ou d'un dispositif de chauffage CTP (100) prévu pour un véhicule, où le procédé présente les étapes suivantes consistant :
- à appliquer un signal de mode de contrôle (255) à l'appareil de commande (110), avec une fréquence et une durée d'application qui se différencient de fréquences et de durées d'un signal pilote dans un mode de fonctionnement normal de l'appareil de commande (110), pour faire passer l'appareil de commande (110) dans un mode de contrôle (260) ;
- à émettre un signal de test (265) fourni à une interface avec l'élément chauffant CTP (130A, 130X) au moins au nombre de un, ledit signal de test répondant au mode de contrôle (260), pour fournir une séquence de test à l'élément chauffant CTP (130A, 130X) au moins au nombre de un ;
- à comparer une information de capteur (275) qui, répondant au signal de test (265), est reçue par une interface avec un dispositif de capteur (140A, 140X) associé à l'élément chauffant CTP (130A, 130X) au moins au nombre de un, à une information de référence prédéfinissable ; et
- à constater un fonctionnement sans défaut de l'appareil de commande (110) ou du dispositif de chauffage CTP (100) quand l'information de capteur (275) est, à l'intérieur d'une plage de tolérance, en conformité avec l'information de référence, pour contrôler l'appareil de commande (110) ou le dispositif de chauffage CTP (100),
**caractérisé en ce que**,
au cours de l'étape de l'application, un signal de modulation d'impulsions en largeur ayant un degré d'exploration prédéfinissable et constant au cours de la durée de l'application est utilisé comme signal de mode de contrôle (255),
où, au cours de l'étape de l'émission, un signal de modulation d'impulsions en largeur ayant un degré d'exploration modifiable est utilisé comme signal de test (265).

2. Procédé selon la revendication 1, **caractérisé par** une étape de la modification d'un degré d'exploration du signal de test (265) selon un schéma prédéfinissable, ladite modification se produisant au cours d'une exécution de la séquence de test, où le schéma prédéfinissable présente une modification du degré d'exploration, par échelons, avec une hauteur d'échelons et / ou une largeur d'échelons prédéfinissable.

3. Procédé selon la revendication 2, **caractérisé en ce que** le degré d'exploration est augmenté par échelons, au cours de l'étape de la modification.

4. Procédé selon la revendication 3, **caractérisé en ce que** les échelons sont égaux à 60 pour cent, 70 pour cent, 80 pour cent, 90 pour cent et 100 pour cent du degré d'exploration.

5. Procédé selon l'une quelconque des revendications 2 à 4, **caractérisé en ce que** l'étape de la modification du degré d'exploration est exécutée après expiration d'un temps de montée répondant à l'émission du signal de test (265).

6. Procédé selon l'une quelconque des revendications précédentes, **caractérisé en ce que**, au cours de l'étape de la constatation, le fonctionnement sans défaut de l'appareil de commande (110) ou du dispositif de chauffage CTP (100) est constaté en outre quand une modification de l'information de capteur (275) se produit dans les limites d'un retard prédéfinissable répondant à une modification du signal de test (265).

7. Appareil de commande (110) pour au moins un élément chauffant CTP (130A, 130X) d'un dispositif de chauffage CTP (100) prévu pour un véhicule, où l'appareil de commande (110) est conçu pour :
- répondant à un signal de mode de contrôle (255) ayant une fréquence et une durée d'application qui se différencient de fréquences et de durées d'un signal pilote dans un mode de fonctionnement normal de l'appareil de commande (110), entrer dans un mode de contrôle (260) ;
- répondant au mode de contrôle (260), émettre un signal de test (265) fourni à une interface avec l'élément chauffant CTP (130A, 130X) au moins au nombre de un, pour fournir une séquence de test à l'élément chauffant CTP (130A, 130X) au moins au nombre de un ;
- comparer une information de capteur (275) qui, répondant au signal de test (265), est reçue par une interface avec un dispositif de capteur (140A, 140X) associé à l'élément chauffant CTP (130A, 130X) au moins au nombre de un, à une information de référence prédéfinissable ; et
- constater un fonctionnement sans défaut de l'appareil de commande (110) ou du dispositif de chauffage CTP (100) quand l'information de capteur (265) est, à l'intérieur d'une plage de tolérance, en conformité avec l'information de référence,
**caractérisé en ce que**,
au cours de l'étape de l'application, un signal de modulation d'impulsions en largeur ayant un degré d'exploration prédéfinissable et constant au cours de la période de l'application est utilisé comme signal de mode de contrôle (255),
où, au cours de l'étape de l'émission, un signal de modulation d'impulsions en largeur ayant un degré d'exploration modifiable est utilisé comme signal de test (265).
